# EUROPÄISCHE PATENTSCHRIFT

(11) **EP 0 553 430 B1**
(45) Veröffentlichungstag und Bekanntmachung des Hinweises auf die Patenterteilung: **07.05.1997**
(21) Anmeldenummer: 92120261.0
(22) Anmeldetag: 27.11.1992
(51) Int. Cl.: H01M 10/10, B23K 35/38, B22F 3/00

(54) **Verfahren zur Herstellung eines Bleiakkumulators mit einem thixotropen Gelelekrolyten**
Process for the production of a lead accumulator having a gelled thixotropic electrolyte
Procédé de fabrication d'un accumulateur au plomb avec un électrolyte gélifié thixotrope

(30) Priorität: 30.01.1992 DE 4202497
(43) Veröffentlichungstag der Anmeldung: 04.08.1993
(73) Patentinhaber: VARTA Batterie Aktiengesellschaft, D-30405 Hannover (DE)
(72) Erfinder: Bechtold, Dieter, W-6368 Bad Vilbel (DE); Vollbert, Jürgen, W-6234 Hattersheim (DE)
(74) Vertreter: Kaiser, Dieter Ralf, Dipl.-Ing.

(56) Entgegenhaltungen:
- DE-A- 3 521 200
- DE-B- 1 118 841
- GB-A- 2 088 623
- PATENT ABSTRACTS OF JAPAN vol. 11, no. 138 (E-503)(2585) 2. Mai 1987
- CHEMICAL ABSTRACTS, vol. 83, no. 22, 1. Dezember 1975, Columbus, Ohio, US; abstract no. 182033g, TERAE, KIYOSHI 'Colloidal electrolyte lead storage batteries' Seite 185

## Beschreibung

Die Erfindung betrifft ein Verfahren zur Herstellung eines Bleiakkumulators mit einem aus Schwefelsäure und einem Gelbildner bestehenden thixotropen Gel-Elektrolyten in zwei Schritten, bei dem in einem ersten Schritt die Poren der Elektroden und der diesen zugeordneten Separatoren mit einer gelbildnerfreien Schwefelsäure getränkt werden und in einem zweiten Schritt der verbleibende Elektrolytraum innerhalb der Akkumulatorenzelle mit einer als thixotropes Gel vorliegenden Phase des Elektrolyten aufgefüllt wird.

Die Technologie des Bleiakkumulators mit festgelegtem Schwefelsäureelektrolyten kennt im wesentlichen zwei Verfahrensweisen bei der Elektrolyteinbringung, nämlich die Direktbefüllung durch die frisch angesetzte, thixotrope Mischung aus Schwefelsäure, deren spezifisches Gewicht dem einer üblichen Füllsäure entspricht, mit feindisperser Kieselsäure als Gelbildner oder eine Zweistufenfüllung, bei der zunächst nur die Elektrodenplatten samt Separatoren einer Tränkung mit einem Teilelektrolyten unterworfen werden, der aus Schwefelsäure ohne Gelbildner besteht, und bei der anschließend der freie Elektrolytraum mit einer als thixotropes Gel vorliegenden Phase des Elektrolyten befüllt wird.

Die erstere Arbeitsweise birgt die Gefahr in sich, daß wegen der alsbald einsetzenden Sol-Gel-Umwandlung der Mischung sich die Poreneingänge der Platten verstopfen, ehe Elektrolyt in das Innere derselben eingedrungen ist. Durch Anlegen eines Vakuums kann diese Gefahr nur unvollständig ausgeräumt werden. Als Nachteil bleibt, daß das Porensystem der Platten und Separatoren ebenfalls von der Verfestigung der aufgenommenen Schwefelsäure erfaßt wird.

Die vorliegende Erfindung ist gattungsmäßig der zweiten Arbeitsmethodik des Füllens zuzuordnen. Deren bekannte Spielarten unterscheiden sich im wesentlichen nur durch die Zusammensetzung der Säure und Gelbildner, die Säurekonzentration sowie durch zusätzlich zwischengeschaltete Teilladungen und -entladungen. Ihnen gemeinam ist jedoch die gesonderte Einbringung einer gelbildnerfreien Schwefelsäure in die Platten- und Separatorenporen durch Tränken in einer Überschußmenge und Entfernen des Überschusses in einem ersten Schritt sowie die endgültige Auffüllung des Akkumulatorbehälters mit einem thixotropen Füllelektrolyten als zweiter Schritt.

Gemäß DE-PS 3041953 wird durch Einfüllen eines flüssigen Schwefelsäure-Elektrolyten und Entladen des Akkumulators eine definierte Schwefelsäuremenge in den Poren der Aktivmassen der Elektroden elektrochemisch gebunden. Der restliche freibewegliche flüssige Elektrolyt wird durch Ausgießen entfernt und kann anschließend, nachdem ihm ein Gelbildner zugemischt wurde, als Füllelektrolyt dienen. Nach dem Einfüllen dieser Mischung muß der Akkumulator durch Wiederaufladung, die zugleich die Gelbildung in Gang bringt, erst in den betriebsfertigen Zustand gebracht werden; diese elektrischen Behandlungen sind zeitraubend.

Aus der DE-PS 3521200 ist ein Füllverfahren bekannt, welches zwar eingeschobene Entlade-/Ladeschritte umgeht, aber mit dem Nachteil des Hantierens der Zellen über Kopf während des Ausleerens weiterhin behaftet ist. Zellen werden dabei mit Säure verschmutzt; die Elektrolytbeschickung bereits verschalteter Batterien wird bei dieser Methode behindert und der Produktionsprozeß wird verlangsamt.

Aus der JP-A-500 31 332 ist ein Füllverfahren bekannt, wobei in einem ersten Schritt mindestens 50% des Totalvolumens des Behälters mit verdünnter Schwefelsäure aufgefüllt wird und in einem zweiten Schritt der Behälter weiter aufgefüllt wird mit kieselsäurehaltiger Schwefelsäure.

Der Erfindung liegt die Aufgabe zugrunde, ein Verfahren zur Befüllung von Bleiakkumulatoren mit einem thixotropen Gel-Elektrolyten anzugeben, das von den genannten Mängeln frei ist, sich in die Fertigung gut einfügt und die elektrische Leistung hinsichtlich Spannungslage und Hochstromkapazität noch verbessert. Ein weiteres Anliegen der Erfindung ist eine Verbesserung der Entgasung.

Die Aufgabe wird erfindungsgemäß durch ein Verfahren gelöst, wie es im Patentanspruch 1 definiert ist.

Ein besonderer Vorteil des neuen Verfahrens liegt darin, daß das lästige Zwischenentleeren der Gefäße durch Auskippen entfällt, daß vielmehr die Elektrolytbeschickung durch stufenweises Einbringen von Teilmengen erfolgt.

Die erste Teilmenge besteht aus Schwefelsäure ohne Kieselsäurezusatz und ist so bemessen, daß sie unter Benetzung der Elektrodenplatten und Separatoren zumindest alle Poren des aktiven Materials und darüber hinaus auch das Porenvolumen der Separatoren ausfüllt, soweit letztere kraft vorhandener Kapillaraktivität die freie Säure vollständig aufzusaugen und festzuhalten vermögen. Dies ist praktisch bei allen mikroporösen Separatoren, seien es z.B. Kunststoffmembranen oder Glasvliese, der Fall. Bei Wellscheidern, gerippten Scheidern oder Lochplatten nehmen also nur die eigentlichen Separatorblätter Säure auf, während die makroskopischen Freiräume zwischen den Platten, etwa die Löcher oder die von den Rippen gebildeten Abstandsspalte, ungefüllt bleiben.

Nach dem Einbringen der ersten Teilmenge, die in der Regel ca. 1/3 der Zelle ausfüllt, ist im wesentlichen kein frei beweglicher Elektrolyt vorhanden.

Besonders günstig ist es, diese erste Elektrolytenzugabe unter Vakuum vorzunehmen. Geschieht die Befüllung unter Atmosphärendruck, empfiehlt es sich, die Säure etwa 1 bis 2 Stunden auf die Platten einwirken zu lassen.

Die Dichte der gelbildnerfreien Schwefelsäure sollte erfindungsgemäß derjenigen Dichte entsprechen, welche eine normale Akkumulatorensäure am Ende einer Aufladung erreicht (beispielsweise 1,24g/ml), sofern formierte Platten eingesetzt sind. Geht man jedoch von unformierten Platten aus, ist die Säuredichte so zu wählen (beispielsweise 1,18g/ml), daß sich bei der nach dem kompletten Füllvorgang vorzunehmenden Formation die oben genannte Endkonzentration einstellt.

Auf die Benetzung der Zelleneinbauten, nämlich der Platten und Separatoren, folgt nunmehr als zweiter Schritt die Auffüllung des gesamten restlichen Freiraumes der Zelle bis zur normalen Füllstandshöhe. Zu dem Freiraum zählen gegebenfalls auch die durch Abstandhalter zwischen den Platten vorhandenen "makroporösen" Bereiche und Spalte oder die Freiräume zwischen den Rippen der gerippten Scheider.

Hierzu wird eine durch Einrühren von staubförmiger pyrogener Kieselsäure (Sil) in Schwefelsäure hergestellte Mischung verwendet. Aus mischtechnischen Gründen kann auch die Verwendung einer wässerigen Kieselsäure-Dispersion vorteilhaft sein.

Die Dichte der Schwefelsäure richtet sich wiederum nach dem Zustand der eingesetzten Platten, d.h. bei bereits formierten Platten ist eine konzentrierte Schwefelsäure der bei einem geladenen Akkumulator üblichen Betriebssäuredichte zu verwenden, bei unformierten Platten eine soweit verdünnte Säure, daß sie bei dem späteren Formationsprozeß die korrekte Endkonzentration erlangt. Die Befüllung kann auch in diesem Fall wahlweise unter Atmosphärendruck oder unter Vakuum erfolgen, wobei die Befüllung unter Vakuum gewisse Zeitvorteile für sich beanspruchen kann. Eine bessere Benetzung wird ebenfalls erzielt.

Von der nunmehr einsetzenden Sol-Gel-Umwandlung der thixotropen Füllsäure werden nur die von dieser ausgefüllten freien Elektrolyträume erfaßt, die mit gelbildnerfreier Schwefelsäure bereits gefüllten Plattenporen und die auf die Separatoren entfallenden Mikroporen bleiben von der Gelifizierung unberührt. Am Ende der Befüllung gemäß der Erfindung steht ein praktisch betriebsbereiter Akkumulator zur Verfügung.

Eine Formation ist allerdings dann erforderlich, wenn anstelle von formierten, d.h. geladenen und trocken eingebauten Platten von unformierten Platten ausgegangen wurde. Die erfindungsgemäße Arbeitsweise an sich bleibt dadurch unverändert.

Unformierte Platten können unmittelbar im Anschluß an die erfindungsgemäße Elektrolytbefüllung in situ, d.h. wie bei einer Blockkastenformation formiert werden. Die eingebrachte Sil/H₂SO₄-Mischung stellt somit auch die Formiersäure dar. Indem sie sich im Verlaufe des Formationsprozesses allmählich verfestigt, erhält die betriebsfertige Akkumulatorzelle zugleich ihren fertigen Gel-Elektrolyten.

Das neue Füllverfahren erweist sich damit als außerordentlich anpassungsfähig, weil auf die Vorgeschichte der Platten jeweils Rücksicht genommen werden kann, aber ebenso auch auf unterschiedliche Zellentypen, falls diese eine spezielle Einstellung der Säurekonzentration und der Konzentration des Gelbildners verlangen.

Entsprechend ausgedehnt ist das Anwendungsgebiet der Erfindung, indem es praktisch alle Bleisäure-Batterien mit festgelegtem Elektrolyten erfaßt, darunter Starterbatterien und Batterien für die Elektrotraktion, ortsfeste Batterien sowie Batterien von besonderer Konstruktion.

## Patentansprüche

1. Verfahren zur Herstellung eines Akkumulators mit einem aus Schwefelsäure und einem Gelbildner bestehenden thixotropen Gel-Elektrolyten in zwei Schritten, bei dem in einem ersten Schritt die Poren der Aktivmassen in den Elektroden und die Poren der den Elektroden zugeordneten Separatoren mit einer gelbildnerfreien Schwefelsäure getränkt werden und in einem zweiten Schritt der verbleibende Elektrolytraum innerhalb der Akkumulatorenzelle mit einer als thixotropes Gel vorliegenden Phase des Elektrolyten aufgefüllt wird, dadurch gekennzeichnet, daß zunächst eine vorgegebene Menge gelbildnerfreier Schwefelsäure eingebracht wird, die so bemessen ist, daß sie alle Elektrodenporen sowie alle Separatorporen ausfüllt, letztere jedoch nur in dem Umfang, wie ein vorhandenes kapillaraktives Porensystem die aufgenommene Flüssigkeit festzuhalten vermag, so daß im wesentlichen kein frei beweglicher Elektrolyt in der Zelle vorhanden ist und ein Zwischenentleeren des Zellengefäßes durch Auskippen entfällt, und daß anschließend das Zellengefäß mit einer gelbildnerhaltigen Füllsäure bis zum normalen Füllstand aufgefüllt wird.

2. Verfahren nach Anspruch 1, dadurch gekennzeichnet, daß die Dichte der gelbildnerfreien Schwefelsäure bei formierten Elektroden etwa der Endsäuredichte in einem Bleiakkumulator bei Ladeschluß entspricht, und daß bei unformierten Elektroden die Dichte der gelbildnerfreien Schwefelsäure so gewählt wird, daß sie mit dem Ende der Formation die bei einem geladenen Bleiakkumulator übliche Dichte erreicht.

3. Verfahren nach Anspruch 2, dadurch gekennzeichnet, daß die Einbringung der gelbildnerfreien Säure unter Vakuum erfolgt.

4. Verfahren nach einem der Ansprüche 1 bis 3, dadurch gekennzeichnet, daß zum Ansetzen der Füllsäure eine pyrogene Kieselsäure mit Schwefelsäure verrührt wird, wobei die Dichte der Schwefelsäure bei formierten Elektroden etwa der Endsäuredichte in einem Bleiakkumulator bei Ladeschluß entspricht, bei unformierten Elektroden jedoch so gewählt ist, daß sie mit dem Ende der Formation die bei einem geladenen Bleiakkumulator übliche Dichte erreicht.

5. Verfahren nach einem der Ansprüche 1 bis 4, dadurch gekennzeichnet, daß die Befüllung mit der gelbildnerhaltigen Säure unter Vakuum erfolgt.

6. Verfahren nach einem der Ansprüche 1 bis 5, dadurch gekennzeichnet, daß ihm bei unformierten Elektroden eine Blockkastenformation unmittelbar nachgeschaltet ist.

## Revendications

1. Procédé de fabrication d'un accumulateur contenant un électrolyte gélifié thixotrope composé d'acide sulfurique et d'un agent formant un gel, en deux étapes, la première étape consistant à imprégner les corps de la masse active dans les électrodes et les pores des séparateurs associés aux électrodes avec de l'acide sulfurique ne contenant pas d'agent de formation de gel, puis dans une seconde étape on remplit le volume d'électrolyte restant dans la cellule d'accumulateur avec l'électrolyte à l'état de phase de gel thixotrope,
caractérisé en ce qu'
on introduit tout d'abord une quantité prédéterminée d'acide sulfurique sans agent formateur de gel, cette quantité est choisie pour remplir tous les pores des électrodes ainsi que tous les pores des séparateurs et ces dernières seulement avec une quantité permettant au système de pores agissant par capillarité, de retenir le liquide reçu, et qu'il n'y ait pratiquement pas d'électrolyte libre dans les cellules en évitant toute évacuation intermédiaire de la cuve à cellules par renversement, puis on remplit la cuve à cellules jusqu'à un niveau de remplissage normal avec un acide de remplissage contenant un générateur de gel.

2. Procédé selon la revendication 1,
caractérisé en ce que
la densité de l'acide sulfurique ne contenant pas d'agent formateur de gel, pour des électrodes formées, correspond sensiblement à la densité finale de l'acide dans un accumulateur au plomb à la fin de la charge et dans le cas d'électrodes non formées, on choisit la densité de l'acide sulfurique libre d'agent formateur de gel pour atteindre la densité usuelle à la fin de la formation, correspondant à celle d'un accumulateur au plomb, chargé.

3. Procédé selon la revendication 2,
caractérisé en ce que
l'acide sans agent formant de gel est introduit sous vide.

4. Procédé selon l'une des revendications 1 à 3,
caractérisé en ce que
pour la préparation de l'acide sulfurique on agite de l'acide silicique pyrolitique et de l'acide sulfurique, la densité de l'acide sulfurique pour des électrodes non formées correspondant sensiblement à la densité finale de l'acide dans un accumulateur au plomb à la fin de la charge et pour des électrodes non formées elle est choisie pour qu'à la fin de la formation on atteigne la densité usuelle dans les accumulateurs au plomb, chargés.

5. Procédé selon l'une des revendications 1 à 4,
caractérisé en ce que
le remplissage avec de l'acide contenant un agent formant un gel se fait sous vide.

6. Procédé selon l'une des revendications 1 à 5,
caractérisé en ce que
dans le cas d'électrodes non formées on poursuit directement par une formation des blocs.

## Claims

1. A process for the production, in two steps, of an accumulator having a thixotropic gel electrolyte composed from sulphuric acid and a gel-forming agent, in which, in a first step, the pores of the active masses in the electrodes and the pores of the separators associated with the electrodes are impregnated with a sulphuric acid free of gel-forming agent and, in a second step, the remaining electrolyte space within the accumulator cell is filled with a phase of the electrolyte in the form of a thixotropic gel, characterized in that first a predetermined quantity of sulphuric acid free of gel-forming agent is introduced, this quantity being such that it fills all the electrode pores and all the separator pores, but these last only to such an extent that a pore system with capillary action which is provided is capable of retaining the received liquid, so that there is substantially no freely movable electrolyte in the cell and the intermediate emptying of the cell vessel by tipping it out is dispensed with, and in that subsequently the cell vessel is filled with a filling acid containing gel-forming agent to the normal filling level.

2. A process according to Claim 1, characterized in that the density of the sulphuric acid free of gel-forming agent in the case of formed electrodes corresponds approximately to the final acid density in a lead accumulator at the end of charging, and in that in the case of unformed electrodes the density of the sulphuric acid free of gel-forming agent is selected such that at the end of formation it reaches the density conventional for a charged lead accumulator.

3. A process according to Claim 2, characterized in that the acid free of gel-forming agent is introduced under vacuum.

4. A process according to one of Claims 1 to 3, characterized in that, to prepare the filling acid, a pyrogenic silicic acid is stirred with sulphuric acid, the density of the sulphuric acid in the case of formed electrodes corresponding approximately to the final acid density in a lead accumulator at the end of charging but in the case of unformed electrodes being selected such that at the end of formation it reaches the density conventional for a charged lead accumulator.

5. A process according to one of Claims 1 to 4, characterized in that the filling with the acid containing gel-forming agent takes place under vacuum.

6. A process according to one of Claims 1 to 5, characterized in that in the case of unformed electrodes a monobloc container formation is connected directly downstream.
